# EUROPÄISCHE PATENTSCHRIFT

(11) **EP 3 268 641 B1**
(45) Veröffentlichungstag und Bekanntmachung des Hinweises auf die Patenterteilung: **11.09.2019**
(21) Anmeldenummer: 16701741.7
(22) Anmeldetag: 25.01.2016
(51) Int. Cl.: F16J 1/22, F16C 7/04, F16C 11/06, F16C 7/06, F02B 75/04, F16C 23/10, F02D 15/02, F16J 1/14

(54) **PLEUEL MIT EINEM KUGELGELENK**
CONNECTING ROD WITH A BALL AND SOCKET JOINT
BIELLE COMPRENANT UNE ARTICULATION À ROTULE

(30) Priorität: 10.03.2015 DE 102015103467
(43) Veröffentlichungstag der Anmeldung: 17.01.2018
(73) Patentinhaber: Hilite Germany GmbH, 97828 Marktheidenfeld (DE)
(72) Erfinder: KAUFMANN, Dietmar, 97837 Tiefenthal (DE); SCHULZE, Dietmar, 35394 Giessen (DE)
(86) Internationale Anmeldenummer: PCT/EP2016/051397
(87) Internationale Veröffentlichungsnummer: WO 2016/142089

(56) Entgegenhaltungen:
- DE-A1- 1 427 373
- DE-A1-102005 055 199
- US-A- 4 552 480

## Beschreibung

### Technisches Gebiet

Die Erfindung betrifft ein Pleuel mit einem Kugelgelenk gemäß dem Oberbegriff des Patentanspruchs 1.

### Stand der Technik

Bei Brennkraftmaschinen wirkt sich ein hohes Verdichtungsverhältnis positiv auf den Wirkungsgrad des Verbrennungsmotors aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuellänge bekannt.

Aus der DE 10 2005 055 199 A1 ist ein Pleuel bekannt, bei dem im kleinen Pleuelauge ein schwenkbarer Hebel eingesetzt ist, in dessen zentraler Öffnung ein Exzenter eingesetzt ist. Der Exzenter dient zur Aufnahme eines Kolbenbolzens. Der Hebel bildet mit dem Exzenter eine Welle-Nabe-Verbindung. Da die Verbindung im Betrieb des Pleuels hoch belastet wird, sind die Anforderungen an die Fertigungstoleranzen der Verbindungspartner hoch. Die am oberen Pleuellagerauge gelagerten Stellkolben sind mit einem Kugelgelenk in Kugelkopfaufnahmen gelagert und dort mit Querbolzen verschraubt.

Aus der DE 1 427 373 A1 ist eine Kugelgelenkverbindung zwischen einem Kolben und einer Kolbenstange bekannt. Eine Rückzugsfläche für die Kolbenstange wird durch eine durch Einwalzen der Kolbenwandung hergestellten Rille gebildet.

Aus der US 4,552,480 A ist eine Kugelgelenkverbindung für einen Scheibenwischermechanismus bekannt, bei welchem ein Kugelkopf in eine elastische Buchse eingepresst wird. Ein Antriebselement deformiert die elastische Buchse derart, dass der Kugelkopf in der Buchse gehalten wird.

### Offenbarung der Erfindung

Eine Aufgabe der Erfindung ist es, ein Pleuel mit einem hochbelastbaren Kugelgelenk mit einem in einer Kugelkopfaufnahme gelagerten Kugelkopf zu schaffen, das einfach zu montieren ist und hoch belastbar ist und Fertigungstoleranzen zulässt.

Die vorgenannte Aufgabe wird mit den Merkmalen des unabhängigen Anspruchs 1 gelöst.

Günstige Ausgestaltungen und Vorteile der Erfindung ergeben sich aus den weiteren Ansprüchen, der Beschreibung und der Zeichnung.

Nach der Erfindung wird ein Pleuel mit Mitteln zur Verstellung einer effektiven Pleuellänge vorgeschlagen, wobei das Pleuel ein oberes Pleuelauge aufweist, welches mittels eines als Exzenter ausgebildeten Lagerbauteils um eine Schwenkachse schwenkbar ist, wobei der Exzenter in eine Öffnung eines Hebels eingesetzt ist und die effektive Pleuellänge über am oberen Pleuellagerauge gelagerten Stützstangen verstellbar ist, wobei die Stützstangen jeweils mit einem Kugelgelenk in Außenteilen gelagert sind.
Erfindungsgemäß weist das Kugelgelenk einen an einer Stützstange angeordneten Kugelkopf auf, der in einer Kugelkopfaufnahme des Außenteils gelagert ist, wobei der Kugelkopf an seiner Außenfläche in der Kugelkopfaufnahme durch ein Sicherungselement der Kugelkopfaufnahme gegen Herausgleiten aus der Kugelkopfaufnahme gesichert ist, wobei das Außenteil an seiner Außenwand wenigstens eine Ausnehmung aufweist, deren Grund zumindest bereichsweise das Sicherungselement bildet.

Das Kugelgelenk ist günstig herzustellen, einfach zu montieren und bietet eine hohe Sicherheit gegen ein ungewolltes Herausziehen des Kugelkopfs aus der Kugelkopfaufnahme. Vorteilhaft kann der Grund nach dem Einsetzen des Kugelkopfes sanft nach innen gedrückt werden, so dass sich der Grund sanft an die Außenfläche des Kugelkopfes anlegt.

Insbesondere kann das Sicherungselement durch einen Wandbereich des Außenteils gebildet werden, z.B. eine radial nach innen ragende Prägung. Vorteilhaft ist der Kugelkopf in der Kugelkopfaufnahme in alle Raumrichtungen verschwenkbar und gleichzeitig axial nur mit hoher Auszugskraft aus der Kugelkopfaufnahme herausziehbar.

Nach einer günstigen Ausgestaltung der Erfindung kann die Kugelkopfaufnahme ein gewölbtes Bodenteil aufweisen, an das sich in axialer Richtung ein zylinderförmiger Raum anschließt und die wenigstens eine Ausnehmung am Übergang zwischen gewölbtem Bereich und zylindrischem Bereich oder im zylindrischen Bereich angeordnet sein. Das gewölbte Bodenteil ist in deren Kontaktbereich vorteilhaft an die Außenkontur des Kugelkopfes angepasst, so dass der Kugelkopf leicht verschwenkbar ist. Gleichzeitig bietet das gewölbte Bodenteil eine definierte Endlage des Kugelkopfs in axialer Richtung. Der gewölbte Bereich ist vorteilhafterweise etwa so tief wie der Radius des Kugelkopfes. Der zylinderförmige Raum bietet Platz für das Sicherungselement und ist im Durchmesser größer als der Kugelkopf.

Nach einer günstigen Ausgestaltung der Erfindung kann der Grund der Ausnehmung wenigstens bereichsweise einen Hinterschnitt bilden. Dabei kann der Grund geschlossen sein oder bereichsweise durchbrochen.

Nach einer günstigen Ausgestaltung der Erfindung kann die Ausnehmung eine Bohrung mit zumindest teilweise erhaltenem Bohrungsgrund sein. Der Bohrungsgrund bildet einen dünnen Steg, der leicht nach innen gedrückt und passend verformt werden kann.

Nach einer günstigen Ausgestaltung der Erfindung können zwei oder mehr Bohrungen am Umfang des Außenteils angeordnet sein. Dadurch ist eine Vergleichmäßigung der durch die Sicherungselemente auf den Kugelkopf ausgeübten Kraft möglich.

Nach einer günstigen Ausgestaltung der Erfindung kann die Ausnehmung als Ringnut an der Außenwand des Außenteils ausgebildet sein. Deren Grund kann, nach Einführen des Kugelkopfs, verformt werden und rundum am Kugelkopf anliegen. Denkbar ist auch, den Nutgrund nur an einzelnen Stellen nach innen zu drücken.

Nach einer günstigen Ausgestaltung der Erfindung kann das Sicherungselement durch eine Wölbung des geschlossenen Grunds der Ausnehmung gebildet sein.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: in längsgeschnittener Darstellung ein Pleuel mit zwei Kugelgelenken nach dem Stand der Technik;
- Fig. 2: eine erste Ausgestaltung eines Kugelgelenks nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

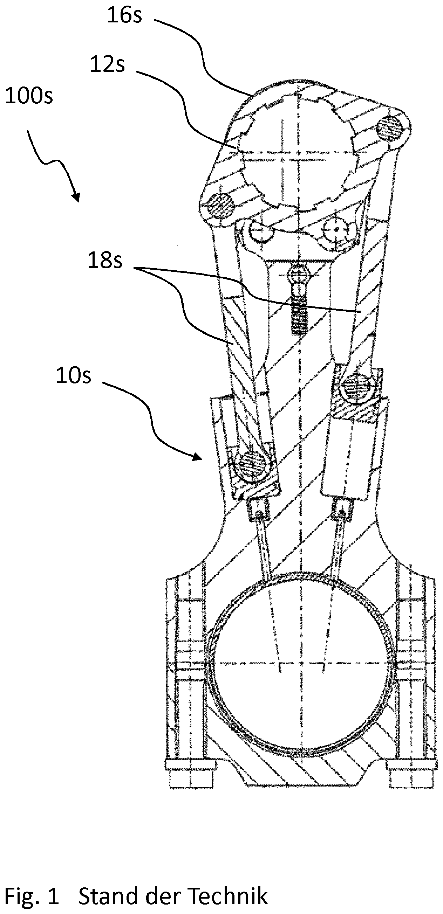

Das bekannte Pleuel 100s in Figur 1 weist ein oberes Pleuellagerauge 12s auf, das zur Aufnahme eines nicht dargestellten Kolbenbolzens vorgesehen ist. Dieser Kolbenbolzen ist in üblicher Weise fest in einen Brennraumkolben des Verbrennungsmotors eingesteckt. Das obere Pleuellagerauge 12s ist durch eine Pleuelstange von dem in der Figur unteren, großen Pleuellagerauge getrennt.
Das obere Pleuellagerauge 12s ist mittels eines als Exzenter ausgebildeten Lagerbauteils um eine Schwenkachse schwenkbar, die parallel versetzt zur Längsachse des oberen Pleuellagerauges 12s liegt. Dazu ist der Exzenter in eine Öffnung eines Hebels 16s eingesetzt. Somit ist es möglich, das obere Pleuellagerauge 12s in seinem Abstand zu einer Pleuellagerachse des in der Figur unteren Pleuellagerauges zu verändern und über die am oberen Pleuellagerauge 12s gelagerten Stellkolben 18s eine variable Verdichtung im Brennraum eines Verbrennungsmotors zu verwirklichen. Dazu sind die Stellkolben 18s mit einem Kugelgelenk 10s in Aufnahmen gelagert und dort mit Querbolzen verschraubt. Die Stellkolben 18s sind mit einem in mit den Stellkolben 18s zusammenwirkenden Hydraulikkammern herrschenden Hydraulikdruck beaufschlagt.

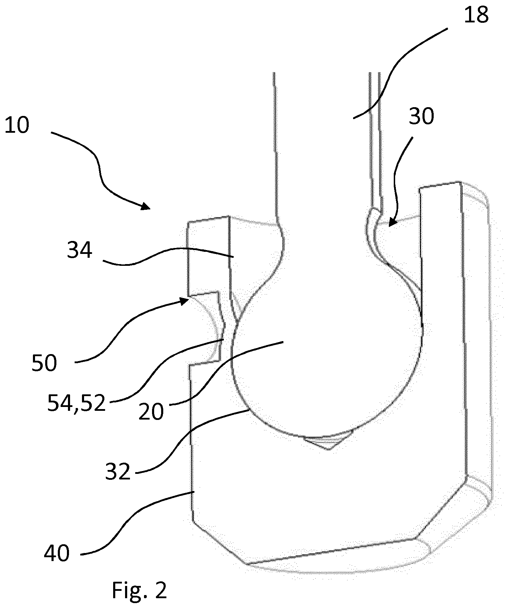

Figur 2 zeigt eine erste Ausgestaltung eines Kugelgelenks 10 nach einem Ausführungsbeispiel der Erfindung. Das Kugelgelenk 10 umfasst einen an einer Stützstange 18 angeordneten Kugelkopf 20, der in einer Kugelkopfaufnahme 30 eines Außenteils 40 gelagert ist. Der Kugelkopf 20 ist an seiner Außenfläche in der Kugelkopfaufnahme 30 durch ein Sicherungselement 54 gegen ein Herausgleiten oder Herausziehen aus der Kugelkopfaufnahme 30 gesichert.

Im dargestellten Ausführungsbeispiel ist das Sicherungselement 54 durch eine Prägung gebildet, die einen Hinterschnitt bildet. Das Sicherungselement 54 ist Teil des Grunds 52 einer radial nach innen ragenden Ausnehmung 50 in der Außenwand des Außenteils 40.

Die Kugelkopfaufnahme 30 umfasst ein gewölbtes Bodenteil 32, das an die Außenkontur des Kugelkopfs 20 angepasst ist und auf dem der Kugelkopf 20 gleiten kann, um Verkippungen der Stützstange 18 zu ermöglichen. In axialer Richtung zum offenen Ende der Kugelkopfaufnahme 30 hin schließt sich ein zylinderförmiger Raum 34 an, in dem die Ausnehmung 50 angeordnet ist. Mit Vorteil ist die Ausnehmung am Übergang zwischen gewölbtem und zylindrischem Raum 34 angeordnet. Dann kann der Kugelkopf 20 praktisch spielfrei zwischen gewölbtem Bodenteil 32 und Sicherungselement 54 eingeschlossen werden, ohne dass eine große Deformation des Grunds 52 notwendig ist.

Gezeigt ist in der Figur eine einzige Bohrung als Ausnehmung 50. Durch mehrere solcher Ausnehmungen 50, die am Umfang des Außenteils 40 angeordnet sind, entsteht in deren Grund 52 eine dünne Wandstärke (Steg) zur Innenkontur. Dieser Steg wird mit einem dafür vorgesehenen Werkzeug nach innen gegen die Stange mit Kugelkopf gedrückt und plastisch verformt. Statt Bohrungen kann auch eine umlaufende Ringnut oder unterbrochene Nutsegmente vorgesehen sein. Die Stützstange 18 mit Kugelkopf 20 lässt sich nur mit sehr hohem Kraftaufwand demontieren.

Das Kugelgelenk 10 wird vorteilhaft für die Lagerung der Stützstange 18 eines Pleuels 100 eingesetzt, welches beispielsweise in einem Verbrennungsmotor mit einstellbarem Verdichtungsverhältnis Anwendung findet, wobei das Pleuel 100 wie oben beschrieben Mittel zur Verstellung der effektiven Pleuellänge aufweisen kann. Auch bei hoher Belastung ist der Kugelkopf 20 des Kugelgelenks 10 sicher in der Kugelkopfaufnahme 30 gehalten.

## Patentansprüche

1. Pleuel (100) mit Mitteln zur Verstellung einer effektiven Pleuellänge, wobei das Pleuel (100) ein oberes Pleuelauge aufweist, welches mittels eines als Exzenter ausgebildeten Lagerbauteils um eine Schwenkachse schwenkbar ist, wobei der Exzenter in eine Öffnung eines Hebels eingesetzt ist und die effektive Pleuellänge über am oberen Pleuellagerauge gelagerten Stützstangen (18) verstellbar ist, wobei die Stützstangen (18) jeweils mit einem Kugelgelenk (10) in Außenteilen (40) gelagert sind, wobei das Kugelgelenk (10) einen an der Stützstange (18) angeordneten Kugelkopf (20) aufweist, der in einer Kugelkopfaufnahme (30) des Außenteils (40) gelagert ist, wobei der Kugelkopf (20) an seiner Außenfläche durch wenigstens ein radial nach innen ragendes Sicherungselement (54) der Kugelkopfaufnahme (30) gegen Herausgleiten aus der Kugelkopfaufnahme (30) gesichert ist, **dadurch gekennzeichnet, dass** das Außenteil (40) an seiner Außenwand wenigstens eine Ausnehmung (50) aufweist, deren Grund (52) zumindest bereichsweise das Sicherungselement (52) bildet.

2. Pleuel (100) nach Anspruch 1, **dadurch gekennzeichnet, dass** die Kugelkopfaufnahme (30) ein gewölbtes Bodenteil (32) aufweist, an das sich in axialer Richtung ein zylinderförmiger Raum (34) anschließt und die wenigstens eine Ausnehmung (50) am Übergang zwischen gewölbtem Bereich (32) und zylindrischem Bereich (34) oder im zylindrischen Bereich (34) angeordnet ist.

3. Pleuel (100) nach Anspruch 2, **dadurch gekennzeichnet, dass** das Sicherungselement (54) dadurch gebildet ist, dass der Grund (52) der Ausnehmung (50) wenigstens bereichsweise einen Hinterschnitt bildet.

4. Pleuel (100) nach einem der vorhergehenden Ansprüche, **dadurch gekennzeichnet, dass** die Ausnehmung (50) eine Bohrung mit zumindest teilweise erhaltenem Bohrungsgrund (52) ist.

5. Pleuel (100) nach einem der vorhergehenden Ansprüche, **dadurch gekennzeichnet, dass** zwei oder mehr Bohrungen am Umfang des Außenteils (40) angeordnet sind.

6. Pleuel (100) nach einem der vorhergehenden Ansprüche, **dadurch gekennzeichnet, dass** die Ausnehmung (50) als Ringnut in der Außenwand des Außenteils (40) ausgebildet ist.

7. Pleuel (100) nach einem der Ansprüche 2 bis 6, **dadurch gekennzeichnet, dass** das Sicherungselement (54) durch eine Wölbung des geschlossenen Grunds (52) der Ausnehmung (50) gebildet ist.

8. Verbrennungsmotor mit einem einstellbaren Verdichtungsverhältnis mit wenigstens einem Pleuel (100) nach einem der vorangegangenen Ansprüche 1 bis 7.

## Claims

1. Connecting rod (100) having means for adjusting an effective connecting rod length, wherein the connecting rod (100) has an upper connecting-rod eye which is pivotable about a pivot axis by means of a bearing component formed as an eccentric, wherein the eccentric is inserted into an opening of a lever, and the effective connecting rod length is adjustable via supporting rods (18) mounted on the upper connecting-rod bearing eye, wherein the supporting rods (18) are each mounted with a ball and socket joint (10) in outer parts (40), wherein the ball and socket joint (10) has a ball head (20) which is arranged on the supporting rod (18) and which is mounted in a ball-head receptacle (30) of the outer part (40), wherein the ball head (20) is secured on its outer surface against siding out of the ball-head receptable (30) by at least one radially inwardly projecting securing element (54) of the ball-head receptacle (30), **characterized in that** the outer part (40) has on its outer wall at least one recess (50) whose base (52) forms the securing element (52) at least in certain regions.

2. Connecting rod (100) according to Claim 1, **characterized in that** the ball-head receptacle (30) has a curved bottom part (32) which is adjoined in the axial direction by a cylindrical space (34), and the at least one receptacle (50) is arranged at the transition between curved region (32) and cylindrical region (34) or in the cylindrical region (34).

3. Connecting rod (100) according to Claim 2, **characterized in that** the securing element (54) is formed by virtue of the base (52) of the recess (50) forming an undercut at least in certain regions.

4. Connecting rod (100) according to one of the preceding claims, **characterized in that** the recess (50) is a bore with an at least partially obtained bore base (52).

5. Connecting rod (100) according to one of the preceding claims, **characterized in that** two or more bores are arranged on the circumference of the outer part (40).

6. Connecting rod (100) according to one of the preceding claims, **characterized in that** the recess (50) is formed as an annular groove in the outer wall of the outer part (40).

7. Connecting rod (100) according to one of Claims 2 to 6, **characterized in that** the securing element (54) is formed by a curvature of the closed base (52) of the recess (50).

8. Internal combustion engine with an adjustable compression ratio having at least one connecting rod (100) according to one of the preceding Claims 1 to 7.

## Revendications

1. Bielle (100) comportant des moyens pour le réglage d'une longueur de bielle effective, dans laquelle la bielle (100) présente un oeil de bielle supérieur, qui peut pivoter autour d'un axe de pivotement au moyen d'un élément de palier réalisé sous forme d'excentrique, dans laquelle l'excentrique est introduit dans une ouverture d'un levier et la longueur de bielle effective est réglable au moyen d'une barre d'appui (18) supportée dans l'oeil de coussinet de bielle supérieur, dans laquelle les barres d'appui (18) sont supportées dans des parties extérieures (40) respectivement avec une rotule (10), dans laquelle la rotule (10) présente une tête sphérique (20) agencée à la barre d'appui (18), qui est supportée dans un logement de tête sphérique (30) de la partie extérieure (40), dans laquelle la tête sphérique (20) est bloquée à sa face extérieure par au moins un élément de blocage (54) du logement de tête sphérique (30) pénétrant radialement vers l'intérieur, contre un glissement hors du logement de tête sphérique (30), **caractérisée en ce que** la partie extérieure (40) présente à sa paroi extérieure au moins un évidement (50), dont le fond (52) forme au moins localement l'élément de blocage (52).

2. Bielle (100) selon la revendication 1, **caractérisée en ce que** le logement de tête sphérique (30) présente une partie de fond incurvée (32), à laquelle une chambre cylindrique (34) se raccorde en direction axiale et ledit au moins un évidement (50) est disposé entre la zone incurvée (32) et la zone cylindrique (34) ou dans la zone cylindrique (34).

3. Bielle (100) selon la revendication 2, **caractérisée en ce que** l'élément de blocage (54) est formé par le fait que le fond (52) de l'évidement (50) forme au moins localement une contre-dépouille.

4. Bielle (100) selon l'une quelconque des revendications précédentes, **caractérisée en ce que** l'évidement (50) est un perçage avec un fond de perçage (52) au moins partiellement conservé.

5. Bielle (100) selon l'une quelconque des revendications précédentes, **caractérisée en ce que** deux ou plusieurs perçages sont disposés à la périphérie de la partie extérieure (40).

6. Bielle (100) selon l'une quelconque des revendications précédentes, **caractérisée en ce que** l'évidement (50) est réalisé sous la forme d'une rainure annulaire dans la paroi extérieure de la partie extérieure (40).

7. Bielle (100) selon l'une quelconque des revendications 2 à 6, **caractérisée en ce que** l'élément de blocage (54) est formé par une courbure du fond fermé (52) de l'évidement (50).

8. Moteur à combustion interne avec un taux de compression réglable avec au moins une bielle (100) selon l'une quelconque des revendications précédentes 1 à 7.
